# EUROPÄISCHE PATENTSCHRIFT

(11) **EP 1 276 700 B1**
(45) Veröffentlichungstag und Bekanntmachung des Hinweises auf die Patenterteilung: **15.09.2004**
(21) Anmeldenummer: 01931652.0
(22) Anmeldetag: 25.04.2001
(51) Int. Cl.: C03C 13/00

(54) **GLASFASER MIT VERBESSERTER BIOLOGISCHER ABBAUBARKEIT**
GLASS FIBER WITH IMPROVED BIOLOGICAL DEGRADABILITY
FIBRE DE VERRE A BIODEGRADABILITE SUPERIEURE

(30) Priorität: 26.04.2000 DE 10020335
(43) Veröffentlichungstag der Anmeldung: 22.01.2003
(73) Patentinhaber: URSA International GmbH, 63263 Neu-Isenburg (DE)
(72) Erfinder: Ehrhardt, Eberhardt, 04509 Löbnitz (DE); MATTHAI, Annegret, 85055 Ingolstadt (DE); RÜSSEL, Christian, 07745 Cospeda (DE); WANGE, Peter, 07745 Jena (DE)
(74) Vertreter: Minderop, Ralph H., Dr. rer. nat.
(86) Internationale Anmeldenummer: PCT/EP2001/004678
(87) Internationale Veröffentlichungsnummer: WO 2001/081259

(56) Entgegenhaltungen:
- EP-A- 0 412 878
- WO-A-95/32925
- WO-A-95/35265
- WO-A-98/30509
- FR-A- 2 781 788
- US-A- 5 523 264

## Beschreibung

Die Erfindung betrifft eine biologisch abbaubare Glasfaser, die für Dämm- und Isolierungszwecke einsetzbar ist und die sich vorteilhaft in einem Verfahren zur Herstellung von Glasfasern einsetzen lässt, in dem das flüssige Glas nach dem Schleuder-Blasverfahren zu Fasern verarbeitet wird.

Es ist nicht auszuschließen, dass künstliche Mineralfasern nach dem Einatmen in der Lunge karzinogen wirken. Untersuchungen zeigen, dass die Kanzerogenität mit der Verweildauer der Fasern in der Lunge zunimmt. Diese ist um so geringer, je löslicher die Faser im biologischen Milieu oder in der Lunge ist. Die Löslichkeit der Fasern hängt unter anderem von der Glaszusammensetzung ab. Für das Inverkehrbringen von Glasfaserprodukten gelten Bestimmungen, die den sogenannten Biopersistenztest von Fasern der zu produzierenden Glaszusammensetzung erfordern.

Für den Einsatz von Produkten für Dämm- und Isolierungszwecke aus biologisch abbaubaren Glasfasern sind aber eine Reihe weiterer Eigenschaften erforderlich, wie die Eignung zur Verarbeitung, mechanische Festigkeit und Resistenz gegenüber Feuchtigkeit. Einige dieser Eigenschaften wie die biologische Abbaubarkeit und die Resistenz gegenüber Feuchtigkeit können sich sogar widersprechen. Für die Herstellung von Glasfasern kommt es somit darauf an, eine Auswahl aus den Glasbestandteilen, d.h. Glasbildnern und Netzwerkwandlern, zu treffen, die geeignet ist, mit der angewendeten Zerfaserungstechnologie Fasern bereitzustellen, die das gewünschte Anforderungsprofil erfüllen. Geringfügige Änderungen der Konzentration einzelner Bestandteile und somit der Glaszusammensetzung können deutliche Änderungen der Parameter des Herstellungsprozesses und Abweichungen von den gewünschten Eigenschaften der Fasern verursachen.

Die EP 0 399 320 B1 beschreibt die Verwendung einer Glaszusammensetzung, die mindestens 55 bis 70 Mol% SiO₂, 0 bis 5 Mol% MgO, 8 bis 24 Mol% CaO, 10 bis 20 Mol% Na₂O, 0 bis 5 Mol% K₂O, 0 bis 5 Mol% B₂O₃ und 0 bis 3 Mol% Al₂O₃ enthält. Darüber hinaus können in dieser Glaszusammensetzung noch TiO₂, Eisenoxide und Fluorid enthalten sein. Die Fasern dieses Dokuments weisen einen Durchmesser von < 8 µm auf, wobei mehr als 10% der Glasfasern einen Durchmesser < 3 µm aufweisen.

Die EP 0 412 878 B1 betrifft eine biologisch abbaubare Glasfaser, die in dem Fall, in dem der Anteil an Al₂O₃ gleich oder größer als 1 Gew.% ist, mehr als 0,1 Gew.% P₂O₅ aufweist. Die EP 0 502 159 B1 offenbart eine Glasfaser mit 61 bis 69 Gew.% SiO₂, 0,1 bis 1,9 Gew.% Al₂O₃ und 7,9 bis 16,0 Gew.% Gesamt-CaO+MgO und 9,0 bis 17,0 Gew.% Na₂O sowie 8,7 bis 15,0 Gew.% B₂O₃, wobei der Rest aus bis zu 3% K₂O, bis zu 3% BaO und weniger als 1% von einem beliebigen oder sämtlichen der Bestandteile Fe₂O₃, TiO₂, SrO oder SO₂ besteht.

Die EP 0 738 692 B1 und 0 738 693 B1 beschreiben biologisch abbaubare Glasfasern, die 45 bis weniger als 57 Gew.% oder 57 bis 60 Gew.% SiO₂, weniger als 2 Gew.% Al₂O₃, 10 bis 16 Gew.% Gesamt-CaO+MgO, 15 (18) bis 23 Gew.% Gesamt-Na₂O+K₂O, 10 bis 12 Gew.% B₂O₃, 0 bis 4 Gew.% P₂O₅ und 0 bis zu 1 Gew.% BaO enthalten.

Bei dem sogenannten Schleuder-Blasverfahren oder Trommelschleuderverfahren wird die Glasschmelze einer bestimmten Zusammensetzung aus den am Rand eines rotierenden Körpers befindlichen Öffnungen herausgeschleudert. Die sich dadurch bildenden Fasern werden im beschleunigten Gasstrom zu dünneren Fasern ausgezogen. Eine optimale Zerfaserung des Glases nach dem Schleuder-Blasverfahren und somit die Eignung einer Glaszusammensetzung für dieses stark einschränkende Herstellungsverfahren zeigt sich an der gewünschten langen Laufzeit der Schleuderscheiben. Das Glas muss so zusammengesetzt sein, dass die Glasschmelze folgende Eigenschaften besitzt.

Der Verarbeitungsbereich des Glases muss bei niedrigen Temperaturen liegen, um eine temperaturbedingte mechanische Deformation und somit eine Veränderung der Scheibengeometrie zu vermeiden. Außerdem führen hohe Temperaturen zu einer verstärkten Korrosion der Schleuderscheibe aufgrund der Oxidation des Stahls. Ferner sollte die Glasschmelze das Schleuderscheibenmaterial nicht stark angreifen; eine hohe Aggressivität der Schmelze hat, ähnlich wie die Schädigung der Scheibe durch hohe Temperaturen, ein Auswaschen der Löcher der Schleuderscheibe zur Folge und somit einen vergrößerten Faserdurchmesser oder eine schlechte Produktqualität.

Von Bedeutung ist außerdem das Viskositäts- und Kristallisationsverhalten der Glasschmelze. Zur Gewährleistung eines optimalen Verarbeitungsprozesses muss die Temperatur der Verarbeitungsviskosität größer als die Entglasungstemperatur sein. Die sonst mögliche Bildung von Kristallen in den Schleuderscheiben würde zum Zusetzen der Löcher führen.

Der Erfindung liegt somit die Aufgabe zugrunde, biologisch abbaubare Glasfasern mit ausreichender Festigkeit, Resistenz gegenüber Feuchtigkeit und guten Verarbeitungseigenschaften bereitzustellen. Die Zusammensetzung des Glases soll darüber hinaus so beschaffen sein, dass das zur Zerfaserung der Glasschmelze verwendete Schleuderorgan möglichst lange bei Gewährleistung einer gleichbleibenden Faser- oder Produktqualität eingesetzt werden kann.

Gelöst wird diese Aufgabe durch eine biologisch abbaubare Glasfaser mit einer Glaszusammensetzung von
58 bis 60 Gew.% SiO₂
15 bis 20 Gew.% Na₂O
0 bis 3 Gew.% K₂O
2 bis 4,5 Gew.% MgO
5 bis 9 Gew.% CaO
7 bis 9 Gew.% B₂O₃
1,1 bis 2,5 Gew.% Al₂O₃
0 bis 0,5 Gew.% SO₄²⁻
0 bis 1 Gew.% Rest,
jeweils bezogen auf die Masse der Zusammensetzung.

Die Erfindung betrifft auch ein Verfahren, in dem man die Schmelze der zuvor bezeichneten geschmolzenen Glaszusammensetzung nach dem sogenannten Schleuder-Blasverfahren oder Trommelschleuderverfahren zur Erzeugung von Glasfasern zerfasert. Gegenstand der Erfindung ist ferner ein Glas mit der zuvor bezeichneten Glaszusammensetzung, das in besonders geeigneter Weise als Ausgangsmaterial zur Herstellung von Glasfasern nach dem sogenannten Schleuder-Blasverfahren oder Trommelschleuderverfahren verwendbar ist. Gegenstand der Erfindung ist schließlich der Einsatz der erfindungsgemäßen Glasfasern als Isolier- und Dämmmaterial.

Gemäß einer bevorzugten Ausführungsform ist die Summe der Bestandteile MgO und CaO ≥ 10,5 Gew.%, bezogen auf die Masse der Zusammensetzung. Besonders bevorzugt beträgt der Anteil an CaO 6,5 bis 8,5 Gew.%. Vorzugsweise ist der Gesamtanteil an Alkalimetalloxiden ≤ 20 Gew.%. Der Anteil an Al₂O₃ beträgt vorzugsweise 1,4 bis 2,2 Gew.%. Gemäß einer weiteren bevorzugten Ausführungsform beträgt der Anteil an SO₄²⁻ 0,05 bis 0,4 Gew.%. Die erfindungsgemäß eingesetzte Glaszusammensetzung enthält weder Bariumoxid noch Phosphorpentoxid.

Als erfindungswesentlich wird angesehen, dass die erfindungsgemäßen Glasfasern mit der Spezifikation WHO-Faser im Biopersistenztest nach intratrachealer Instillation eine Halbwertszeit von etwa 30 bis 40 Tagen gemäß der Gefahrstoffverordnung aufweisen. Somit werden zum einen die neusten Richtlinien der deutschen Gefahrstoffverordnung erfüllt und die geforderte Abbaubarkeit der Glasfasern ist gesichert. Andererseits ist die Zersetzbarkeit der Fasern nicht zu hoch und somit die erforderliche Resistenz der Faser gegenüber Feuchtigkeit und hydrothermalem Angriff und die gewünschte Beständigkeit der Glasfasern oder daraus erhaltener Produkte wie Glasfaservliesen bei Lagerung oder bestimmungsgemäßen Einsatz gewährleistet. Die erfindungsgemäßen Gläser sind hinsichtlich ihrer Wasserbeständigkeit in die sogenannte hydrolytische Klasse 4 nach DIN ISO 719 einzuordnen; sie zeigen bei dieser Prüfung einen Verbrauch an HCl von 1,0 bis 1,7 ml.

Erfindungswesentlich ist ferner, dass die eingesetzte Glaszusammensetzung eine deutlich höhere Betriebsdauer, insbesondere wegen der möglichen geringeren Verarbeitungstemperatur, der Schleuderscheibe ermöglicht. Diese Temperaturen liegen für η=10³ dPas im Bereich von 920 bis 970 °C und für η=10⁴ dPas im Bereich von 820 bis 850 °C.

Zur Herstellung der erfindungsgemäßen Glasfaser kann das Gemenge nach Abwiegen und Vermischen der teilweise natürlichen Rohstoffe mit ihren Verunreinigungen hergestellt und in die Schmelzwanne eingelegt werden. Zum Erschmelzen des Glases aus dem Gemenge durchläuft dieses die verschiedenen Wannenbereiche mit unterschiedlichen Temperaturen und somit die verschiedenen Stufen des Glasschmelzprozesses. Im Feeder kann das in der Schmelzwanne auf 1.200 bis 1.400 °C gebrachte Glas auf die optimale Verarbeitungstemperatur abgekühlt und mittels temperatur- und somit durchsatzregelbaren Platindüsen als Glasstrahl den Zerfaserungsmaschinen übergeben werden.

Die Zerfaserung der Glasschmelze kann nach dem Schleuder-Blasverfahren in einer Hochtemperaturzentrifuge mit perforierter Topfscheibe erfolgen. Die aus den Löchern austretenden Primärfasern werden durch eine ringförmig angeordnete, äußere Blaseinrichtung im beschleunigten Luftoder Gasstrom zu dünneren Fasern ausgezogen und in die Fasersammelkammer oder den Fallschacht geblasen. Der sich unter den Zerfaserungsmaschinen bildende Faserstrumpf wird mittels ringförmig angeordneten Düsen mit einem Bindemittelgemisch besprüht. Luftdüsen verteilen die Fasern über die gesamte Breite des Fallschachtes, der weiterhin der Trennung von Fasern und Prozessluft sowie der Einstellung der Vliesbreite dient. Über die Bandgeschwindigkeit am Boden des Fallschachts wird das Flächengewicht des Primärvlieses geregelt. Diese Verfahrensweise ist bekannt und beispielsweise beschrieben in Ullmanns Encyklopädie der technischen Chemie, Band 11, Seiten 359 bis 374, 4. Aufl., auf dessen Offenbarung hiermit Bezug genommen wird.

Zur Aushärtung des Bindemittels bei Temperaturen zwischen 190 bis 250 °C durchläuft das Vlies den Härteofen zwischen zwei perforierten, zum Einstellen der Produktdicke im Abstand zueinander verstellbaren Plattenbändern. Das Vlies kann wahlweise kaschiert werden. Die Herstellung des Produkts endet mit der Konfektionierung und Verpackung.

Die folgenden Beispiele dienen der weiteren Erläuterung der Erfindung.

### Beispiele

Für die folgenden Untersuchungen wurden vier Gläser der in der Tabelle 1 wiedergegebenen Zusammensetzung erzeugt. Die mit A und B bezeichneten Muster sind erfindungsgemäße Proben, die mit den Gläsern der Vergleichsbeispiele 1 und 2 verglichen werden.

**Tabelle 1**

| | Zusammensetzung A | Zusammensetzung B | Vergleich 1 | Vergleich 2 |
|---|---|---|---|---|
| Si₂O | 59,0 | 58,6 | 56,8 | 62,3 |
| Na₂O | 18,0 | 17,8 | 17,8 | 15,8 |
| K₂O | 0,5 | 0, 4 | 0,2 | 0, 5 |
| MgO | 3,9 | 4,5 | 4,4 | 4,5 |
| CaO | 8,2 | 7,1 | 7,2 | 7,3 |
| B₂O₃ | 7, 9 | 8, 9 | 12, 4 | 6,9 |
| Al₂O₃ | 2,2 | 1, 4 | 1,0 | 2, 3 |
| SO₄²⁻ | 0,1 | * | * | * |
| Rest | 0,2 | 0,9 | 0,2 | 0, 4 |

| | | | | |
|---|---|---|---|---|
| * nicht bestimmt | | | | |

Der aufgrund der Glaszusammensetzung ermittelte Kanzerogenitätsindex KI beträgt für die erfindungsgemäßen Fasern A und B jeweils 34,1 und 35,9 und für die Vergleichsfasern 1 und 2 jeweils 40,0 und 30,4.

Es wurden die Biopersistenz und die Wasserbeständigkeit der Glasfasern sowie das Viskositäts-Temperaturverhalten der Glasschmelze und die Verarbeitbarkeit der Glasschmelze nach dem Schleuder-Blasverfahren geprüft.

Für die Prüfungen der biologischen Abbaubarkeit wurden die Glasfasern entsprechend dem derzeit gültigen Protokoll der Europäischen Union ECB/TM27 rev. 7 nach den Grundsätzen der GLP im Tierversuch nach intratrachealer Instillation untersucht. Die Ergebnisse zur Halbwertszeit der Elimination der WHO-Fasern in der Tierlunge sind in Tabelle 2 dargestellt. Es zeigt sich, dass die Fasern der Zusammensetzung 1 die geringste Halbwertszeit besitzen. Die WHO-Fasern der Zusammensetzung 2 haben nicht die von der deutschen Gefahrstoffverordnung geforderte Halbwertszeit von ≤ 40 Tagen.

Die Bestimmung der Wasserbeständigkeit erfolgte nach DIN ISO 719. Dabei wird die Konzentration der ausgelaugten Alkalimetallionen wie Na⁺ und K⁺ nach einer gewissen Lagerungsdauer des Glases in Wasser bei einer bestimmten Temperatur bestimmt. Entsprechend dem Verbrauch an Salzsäure erfolgt die Einordnung der Gläser in die hydrolytischen Klassen. Je höher der Verbrauch an HCl, desto höher der Anteil herausgelöster Alkaliionen, desto geringer die Wasserbeständigkeit.

Die Viskositäten wurden mittels Rotationsviskosimeter temperaturabhängig im Viskositätsbereich von etwa 10² bis 10⁵ dPas gemessen.

Die Bestimmung des Kristallisations-Temperaturverhaltens erfolgte an kleinen Glasstücken, die auf einer Platinschiene in einem Ofen mit Temperaturgradient von 700 bis 900 °C zwei Stunden lang getempert worden waren. Nach dem Abkühlen wurden die darin auftretenden Kristalle im Mikroskop ausgemessen. Als Resultat werden die maximale Kristallwachstumsgeschwindigkeit und zwei das Entglasungsverhalten charakterisierende Temperaturen erhalten:
T_{KWGmax} - die Temperatur der maximalen Kristallwachstumsgeschwindigkeit und
T_{L} - die Liquidustemperatur, bei der keine Kristallisation mehr zu beobachten ist.

Die Prüfergebnisse sind in Tabelle 2 zusammengefasst.

**Tabelle 2**

| | Zusammensetzung A | Zusammensetzung B | Vergleich 1 | Vergleich 2 |
|---|---|---|---|---|
| Wasserbeständigkeit hydrolytische Klasse | 4 | 4 | 4 | 3 |
| Verbrauch HCl [ml] | 1,0 | 1,5 | 1,9 | 0,8 |
| Kristallisation KWGₘₐₓ [µm/h] | 33 | 16 | - | 9 |
| T_{KMGmax} [°C] | 850 | 850 | - | 820 |
| T_{liquidus} [°C] | 880 | 880 | - | 850 |
| Viskosität Temp. bei 10² dPas [°C] | 1180 | 1145 | 1090 | 1225 |
| Temp. bei 10³ dPas [°C] | 960 | 940 | 925 | 990 |
| Temp. bei 10⁴ dPas [°C] | 830 | 825 | 830 | 860 |
| Dichte [g/cm³] | 2,561 | 2,560 | 2,553 | 2,544 |
| Halbwertszeit im I.t.-Test | - | 37 Tage | 29 Tage | 60 Tage |

Der Vergleich der Ergebnisse der Wasserbeständigkeit mit denen der Biopersistenz zeigt, dass die Gläser B und 1, deren Biolöslichkeit den Richtlinien der deutschen Gefahrstoffverordnung entspricht, in die hydrolytische Klasse 4, jedoch das im biologischen Milieu unlöslichere Glas 2 in die Klasse 3 einzuordnen ist.

Für Aussagen hinsichtlich des Auftretens von Kristallen in den Schleuderscheiben, müssen T_{KWGmax} und T_{L} in Verbindung mit dem Viskositäts-Temperaturverhalten oder der Temperatur der Zerfaserungsviskosität gesehen werden. Gläser mit geringer Kristallisationsneigung zeichnen sich durch eine geringe Kristallwachstumsgeschwindigkeit aus und weisen eine um 50 K tiefere Liquidustemperatur, zu der Temperatur, die einer Viskosität von 10³ dPas entspricht, auf.

Das Kristallisationsverhalten des Glases B ist ähnlich dem der Gläser A und 2. Beim Vergleich des Viskositätsverhaltens der einzelnen Gläser zeigte sich, dass die Temperaturen der Gläser A, B und 1 bei den Viskositäten 10², 10³, 10⁴ dPas deutlich niedriger sind als die des Glases 2.

Die Gläser der Vergleichszusammensetzungen, insbesondere 1, können nach dem Schleuderverfahren verarbeitet werden. Glas 1 besitzt eine niedrige Verarbeitungstemperatur und die gewünschte Biolöslichkeit der Fasern. Nachteilig ist die geringe Wasserbeständigkeit, die sich in einem Verbrauch von 1,9 ml HCl äußert. Demgegenüber zeigen die erfindungsgemäßen Gläser bei der Ermittlung der Wasserbeständigkeit einen Verbrauch an HCl von 1,0 und 1,5 ml. Dagegen ist die Beständigkeit des Glases 2 so hoch, dass das Glas nur geringfügig hydrolysiert und damit die Verweildauer der Fasern in der Lunge zu groß ist. Nachteilig an Glas 2 ist ferner die höhere Verarbeitungstemperatur und der sich daraus ergebende höhere Verbrauch an Schleuderscheiben.

Die erfindungsgemäßen Glaszusammensetzungen vereinen die guten Eigenschaften des Glases, der Schmelze und der Fasern. Die Schmelzen zeichnen sich durch niedrige Verarbeitungstemperatur, geringe Kristallisationsneigung und geringe Aggressivität gegenüber den Schleuderscheiben aus und gewährleisteten somit lange Laufzeiten der Schleuderscheiben. Diese Gläser besitzen eine Löslichkeit, die ein zu starkes Voranschreiten der Hydrolyse der Fasern verhindert und das Produkt im komprimierten Zustand unter den Bedingungen der Lagerung die gewünschten Eigenschaften nicht verlieren lässt. Dennoch weisen die Fasern die gesetzlich geforderte Biolöslichkeit auf.

## Patentansprüche

1. Biologisch abbaubare Glasfaser, **gekennzeichnet durch** eine Glaszusammensetzung von
58 bis 60 Gew.% SiO₂
15 bis 20 Gew.% Na₂O
0 bis 3 Gew.% K₂O
2 bis 4,5 Gew.% MgO
5 bis 9 Gew.% CaO
7 bis 9 Gew.% B₂O₃
1,1 bis 2,5 Gew.% Al₂O₃
0 bis 0,5 Gew.% SO₄²⁻
0 bis 1 Gew.% Rest,
jeweils bezogen auf die Masse der Zusammensetzung.

2. Glasfaser nach Anspruch 1, worin die Summe der Bestandteile MgO und CaO ≥ 10,5 Gew.%, bezogen auf die Masse der die Faser bildenden Zusammensetzung, beträgt.

3. Glas, enthaltend
58 bis 60 Gew.% SiO₂
15 bis 20 Gew.% Na₂O
0 bis 3 Gew.% K₂O
2 bis 4,5 Gew.% MgO
5 bis 9 Gew.% CaO
7 bis 9 Gew.% B₂O₃
1,1 bis 2,5 Gew.% Al₂O₃
0 bis 0,5 Gew.% SO₄²⁻
0 bis 1 Gew.% Rest,
jeweils bezogen auf die Masse der Zusammensetzung.

4. Glas nach Anspruch 3,worin die Summe der Bestandteile MgO und CaO ≥ 10,5 Gew.%, bezogen auf die Masse der Glaszusammensetzung, beträgt.

5. Verfahren zur Herstellung einer biologisch abbaubaren Glasfaser, in dem eine Glaszusammensetzung geschmolzen, zu Primärfasern zerfasert und zu Sekundärfasern ausgezogen wird, **dadurch gekennzeichnet, dass** man eine Glaszusammensetzung von
58 bis 60 Gew.% SiO₂
15 bis 20 Gew.% Na₂O
0 bis 3 Gew.% K₂O
2 bis 4,5 Gew.% MgO
5 bis 9 Gew.% CaO
7 bis 9 Gew.% B₂O₃
1,1 bis 2,5 Gew.% Al₂O₃
0 bis 0,5 Gew.% SO₄²⁻
0 bis 1 Gew.% Rest,
jeweils bezogen auf die Masse der Zusammensetzung, nach einem Schleuderverfahren zerfasert.

6. Verfahren nach Anspruch 5, **dadurch gekennzeichnet, dass** man eine geschmolzene Glaszusammensetzung einsetzt, deren Summe der Bestandteile MgO und CaO ≥ 10,5 Gew.%, bezogen auf die Masse der Zusammensetzung, beträgt.

7. Verfahren nach Anspruch 5 oder 6, **dadurch gekennzeichnet, dass** man die geschmolzene Glaszusammensetzung mittels einer rotierenden Scheibe zerfasert.

8. Verwendung der Glasfasern nach Anspruch 1 oder 2 als Isolier- oder Dämmmaterial.

## Claims

1. Biodegradable glass fibre **characterised by** a glass composition of
58 to 60 % by wt. of SiO₂
15 to 20 % by wt. of Na₂O
0 to 3 % by wt. of K₂O
2 to 4.5 % by wt. of MgO
5 to 9 % by wt. of CaO
7 to 9 % by wt. of B₂O₃
1.1 to 2.5 % by wt. of Al₂O₃
0 to 0.5 % by wt. of SO₄²⁻
0 to 1 % by wt. being the remainder
based on the mass of the composition in each case.

2. Glass fibre according to claim 1 in which the sum total of the components MgO and CaO is ≥10.5 % by wt. based on the mass of the composition forming the fibre.

3. Glass containing
58 to 60 % by wt. of SiO₂
15 to 20 % by wt. of Na₂O
0 to 3 % by wt. of K₂O
2 to 4.5 % by wt. of MgO
5 to 9 % by wt. of CaO
7 to 9 % by wt. of B₂O₃
1.1 to 2.5 % by wt. of Al₂O₃
0 to 0.5 % by wt. of SO₄²⁻
0 to 1 % by wt. being the remainder
based on the mass of the composition in each case.

4. Glass according to claim 3 in which in which the sum total of the components MgO and CaO is ≥10.5 % by wt. based on the mass of the glass composition.

5. Process for the production of a biodegradable glass fibre in which the glass composition is melted, shredded to form primary fibres and drawn to form secondary fibres **characterised in that** a glass composition of
58 to 60 % by wt. of SiO₂
15 to 20 % by wt. of Na₂O
0 to 3 % by wt. of K₂O
2 to 4.5 % by wt. of MgO
5 to 9 % by wt. of CaO
7 to 9 % by wt. of B₂O₃
1.1 to 2.5 % by wt. of Al₂O₃
0 to 0.5 % by wt. of SO₄²⁻
0 to 1 % by wt. being the remainder
based on the mass of the composition in each case is shredded into fibres by a centrifugal process.

6. Process according to claim 5 **characterised in that** a molten glass composition is used whose sum total of the components MgO and CaO is ≥10.5 % by wt. based on the mass of the composition.

7. Process according to claim 5 or 6 **characterised in that** the molten glass composition is shredded into fibres by means of a rotating disc.

8. Use of the glass fibres according to claim 1 or 2 as insulating or damping material.

## Revendications

1. Fibre de verre biodégradable, **caractérisée par** une composition du verre de
58 à 60 % en poids de SiO₂
15 à 20 % en poids de Na₂O
0 à 3 % en poids de K₂O
2 à 4,5 % en poids de MgO
5 à 9 % en poids de CaO
7 à 9 % en poids de B₂O₃
1,1 à 2,5 % en poids de Al₂O₃
0 à 0,5 % en poids de SO₄²⁻
0 à 1 % en poids solde
chaque fois sur base de la masse de la composition.

2. Fibre de verre selon la revendication 1, dans laquelle le pourcentage des constituants MgO et Cao est égal ou supérieur à 10,5 % en poids, sur base de la masse de la composition constituant la fibre.

3. Verre, contenant
58 à 60 % en poids de SiO₂
15 à 20 % en poids de Na₂O
0 à 3 % en poids de K₂O
2 à 4,5 % en poids de MgO
5 à 9 % en poids de CaO
7 à 9 % en poids de B₂O₃
1,1 à 2,5 % en poids de Al₂O₃
0 à 0,5 % en poids de SO₄²⁻
0 à 1 % en poids solde
chaque fois sur base de la masse de la composition.

4. Verre selon la revendication 3, dans laquelle le pourcentage des constituants MgO et Cao est égal ou supérieur à 10,5 % en poids, sur base de la masse de la composition de verre.

5. Procédé de fabrication d'une fibre de verre biodégradable, dans lequel une composition de verre est fondue, est transformée en fibres primaires et est étirée en fibres secondaires, **caractérisé en ce que** l'on transforme en fibres une composition de verre de
58 à 60 % en poids de SiO₂
15 à 20 % en poids de Na₂O
0 à 3 % en poids de K₂O
2 à 4,5 % en poids de MgO
5 à 9 % en poids de CaO
7 à 9 % en poids de B₂O₃
1,1 à 2,5 % en poids de Al₂O₃
0 à 0,5 % en poids de SO₄²⁻
0 à 1 % en poids solde
chaque fois sur base de la masse de la composition, par un procédé par centrifugation.

6. Procédé selon la revendication 5, **caractérisé en ce que** l'on prépare une composition de verre fondu, dont la somme des constituants MgO et Cao est égale ou supérieure à 10,5 % en poids, sur base de la masse de la composition.

7. Procédé selon la revendication 5 ou 6, **caractérisé en ce que** l'on transforme en fibres la composition de verre fondu au moyen d'un disque rotatif.

8. Utilisation des fibres de verre selon la revendication 1 ou 2, en tant que matériau isolant ou calorifuge.
